# FASCICULE DE BREVET EUROPEEN

(11) **EP 0 413 623 B1**
(45) Date de publication et mention de la délivrance du brevet: **01.12.1993**
(21) Numéro de dépôt: 90402219.1
(22) Date de dépôt: 02.08.1990
(51) Int. Cl.: F16C 11/06

(54) **Cage à rotule pour articulation démontable**
Kugelgehäuse für abnehmbares Gelenk
Ball-socket for a dismountable joint

(30) Priorité: 14.08.1989 FR 8910868
(43) Date de publication de la demande: 20.02.1991
(73) Titulaire: AIRAXS.A., F-25320 Chemaudin (FR)
(72) Inventeur: Dony, Dominique, F-25640 Braillans (FR)
(74) Mandataire: Colas, Jean-Pierre

(56) Documents cités:
- DE-U- 8 715 953
- FR-A- 2 101 999
- GB-A- 323 976

## Description

La présente invention est relative à une cage à rotule, c'est-à-dire une pièce pourvue de moyens de fixation à un support et présentant une cavité, reliée à l'extérieur par un canal, et adaptée à recevoir une rotule, solidaire d'un tourillon, et introduite dans ladite cavité par ledit canal pour constituer une articulation, et dans le cas présent, une articulation démontable.

On connaît depuis le document GB-A-323976, une telle cage pourvue d'une bague élastique, dans son ensemble en forme de C, dont le corps entoure ladite cage et dont les extrémités pénètrent dans deux fentes de la cage, ces fentes étant disposées de part et d'autre du canal d'introduction de la rotule et débouchant dans celui-ci pour permettre aux extrémités de la bague de faire saillie à l'intérieur du canal et de retenir la rotule dans la cavité, ces fentes étant obliques par rapport à l'axe du canal et s'écartant du centre de la cavité en se rapprochant dudit axe. Selon ce document, la forme de la bague est calculée de telle façon que, lorsque la rotule est dans la cavité, les extrémités de la bague sont en contact constant avec ladite rotule.

Pour le montage, le document GB-A-323976 prévoit l'utilisation d'un petit outil, en forme de languette, livré avec la cage et placé entre l'extérieur de celle-ci et la bague près du débouché extérieur de la fente. En faisant pivoter cet outil, on écarte l'extrémité de la bague de l'axe du canal.

Pour permettre le montage de la rotule en une seule opération, par enfoncement de la rotule dans le canal, la demanderesse a proposé, dans le document EP-A-0 287411, des modifications au dispositif connu, ces modifications consistant en ce que, lorsque la rotule est absente, la bague d'une part exerce sur la cage une force de pression à peu près parallèle à l'axe du canal en deux points situés de part et d'autre de celui-ci et écartés de cet axe, et, d'autre part, exerce d'autres forces de pression sur la face interne de la fente. L'autre modification consiste en ce que, lorsque la rotule est dans la cavité, le tourillon étant coaxial au canal, la bague n'est en contact ni avec la rotule ni avec le tourillon et occupe la même position que lorsque la rotule est absente.

Il est apparu à l'usage que cette solution, pour donner de bons résultats, imposait que les extrémités de la bague soient adoucies, de façon à ne pas risquer d'endommager la surface de la rotule, ce qui se produirait si ces extrémités de la bague sont à bord vif, tel qu'il résulte du découpage préalable d'une lame d'acier. Un traitement des extrémités de la bague est une opération relativement coûteuse, qu'il est désirable d'éviter. Par ailleurs, surtout si la cage est réalisée en matière plastique de rigidité relativement faible, il peut arriver que la rotule se dégage sous l'effet d'un effort d'extraction dirigé obliquement par rapport à l'axe du canal.

Le document FR-A7-2.101.999 décrit une articulation sphérique dans laquelle une rotule est maintenue par un ressort en forme générale de U, dont les extrémités présentent chacune une pliure curviligne disposée de telle sorte que, lors de l'introduction de la rotule, on peut apparemment éviter tout contact entre celle-ci et les extrémités du ressort, la rotule portant essentiellement sur l'un ou l'autre côté de la pliure, sur la face interne du ressort. Le corps de l'articulation ne comporte pas de canaux traversés par les branches du ressort, si bien que la rotule se dégage sans difficulté sous l'effet d'un effort de traction suffisant, quelle que soit sa direction.

La présente invention a pour but de remédier aux incidents ci-dessus, c'est-à-dire de fournir une cage à rotule dont les extrémités de la bague ne risquent pas de rayer ou d'endommager la surface de la rotule, et qui simultanément demande un effort accru pour l'arrachement de la rotule en cas d'extraction oblique, ces résultats étant obtenus pour un prix de revient aussi réduit que possible.

Pour obtenir ce résultat, l'invention fournit une cage à rotule formée d'un corps présentant une cavité reliée à l'extérieur par un canal et adaptée à recevoir une rotule solidaire d'un tourillon et introduite dans ladite cavité par ledit canal pour constituer une articulation démontable, ladite cage étant pourvue de moyens de fixation à un support, et d'une bague élastique, dans son ensemble en forme de C, dont le corps entoure ladite cage, et dont les extrémités pénètrent dans deux fentes de la cage, ces fentes étant disposées de part et d'autre dudit canal et débouchant dans celui-ci pour permettre aux extrémités de la bague de faire saillie à l'intérieur du canal et de retenir la rotule dans la cavité, ces fentes étant obliques par rapport à l'axe du canal, et s'écartant du centre de la cavité en se rapprochant dudit axe, la forme de la bague étant calculée de telle façon que lorsque la rotule est dans la cavité, les extrémités de la bague sont en contact constant avec ladite rotule, cette cage à rotule présentant, suivant un premier mode d'exécution, les particularités suivantes :
- les deux zones d'extrémité de la bague comportent une partie repliée vers l'extérieur par rapport au centre de la cavité, selon une pliure curviligne calculée pour que le contact entre la bague et la rotule se fasse sur l'extérieur de la pliure curviligne lors de l'introduction de la rotule et sur l'intérieur de ladite pliure curviligne lorsque la rotule est dans ladite cavité, à l'exclusion de tout contact avec le bord d'extrémité de la partie repliée;
- et les parties repliées peuvent pénétrer chacune dans la fente correspondante, et leur longueur est calculée pour que le bord d'extrémité de cette partie repliée vienne en appui contre la paroi interne du canal ou contre la paroi externe de la fente lorsque la rotule est soumise à un effort d'extraction.

Suivant un second mode d'exécution, la cage à rotule selon l'invention présente les particularités suivantes :
- les deux zones d'extrémité de la bague comportent une partie repliée vers l'intérieur par rapport au centre de la cavité, selon une pliure curviligne calculée pour que le contact entre la bague et la rotule se fasse sur l'extérieur de la pliure curviligne lors de l'introduction de la rotule et sur l'intérieur de ladite pliure curviligne lorsque la rotule est dans ladite cavité, à l'exclusion de tout contact avec le bord d'extrémité de la partie repliée;
- et leur longueur est calculée pour que, lorsque la rotule est dans la cage, le bord d'extrémité de la partie repliée soit à l'intérieur de la fente, et lorsque la rotule est soumise à un effort d'extraction, le bord d'extrémité de la partie repliée s'écarte du reste de la bague pour venir en contact avec la paroi interne de la fente.

Ces deux modes d'exécution ne sont pas strictement équivalents. En effet, la première présente une tenue plus efficace à l'extraction dans le cas d'efforts axiaux ou presque axiaux, alors que la seconde procure une résistance accrue même dans le cas d'efforts d'extraction fortement obliques.

De préférence, dans l'un et l'autre cas, le bord d'extrémité de chaque partie repliée est à angles vifs pour un frottement important contre une paroi intérieure du canal ou de la fente.

D'autres particularités, déjà décrites dans EP-A- 0287.411 peuvent également être associées aux particularités de l'invention.

L'invention va maintenant être exposée de façon plus détaillée à l'aide d'exemples pratiques illustrés avec les dessins, parmi lesquels :

Figure 1 est une vue en coupe, perpendiculaire au plan de la bague, de la cage à rotule.

Figures 2 à 6 sont des vues en coupe représentant respectivement le début de l'introduction de la rotule dans la cavité, le milieu de la phase d'introduction de ladite rotule, la situation en position de repos, la rotule étant engagée, la situation en cas d'une force d'extraction axiale, et la situation dans le cas d'une force d'extraction oblique, les extrémités de la bague étant, dans tous ces cas, repliées vers l'extérieur.

Figures 7 à 11 sont des coupes analogues respectivement aux figures 2 à 6, mais dans le cas où les extrémités de la bague sont repliées vers l'intérieur.

Figure 12 est une vue analogue aux figures 4 et 9 et montrant une autre variante.

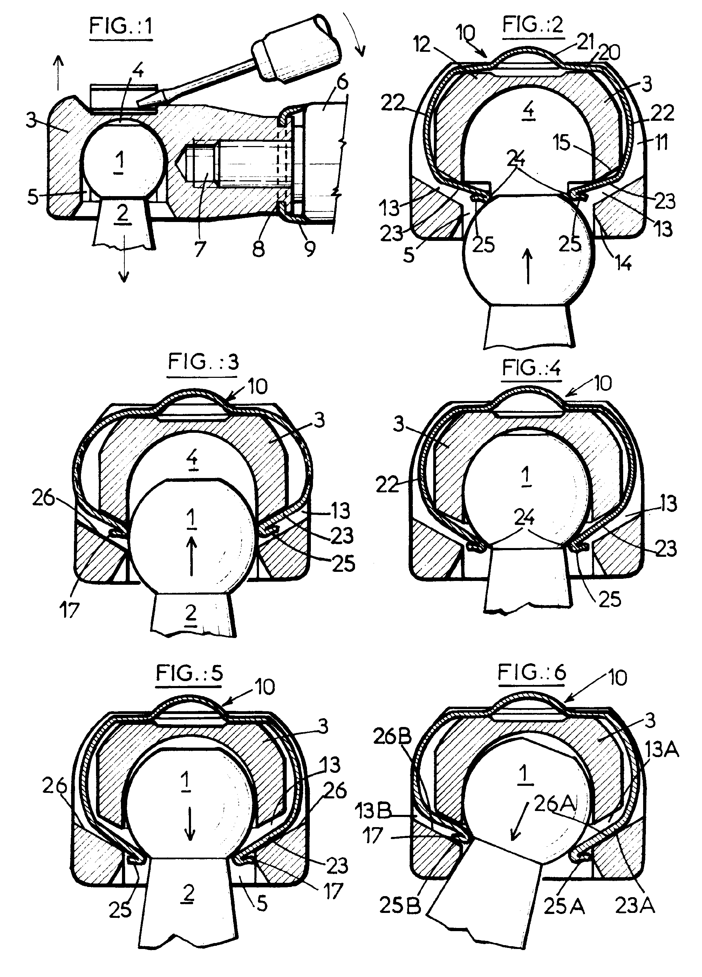

La figure 1 montre une articulation comprenant d'une part une rotule 1, portée par un tourillon 2, de type classique. Les formes et dimensions de ces rotules et tiges sont normalisées, notamment chez les constructeurs automobiles. L'articulation comprend, par ailleurs, une cage à rotule 3 qui présente une cavité ou logement 4, de forme hémisphérique, destinée à recevoir la rotule, et débouchant à l'extérieur par un canal 5, de même diamètre.

La cage à rotule 3 est pourvue, par ailleurs, de moyens de fixation à un support, qui peut être un ressort à gaz 6, représenté en partie seulement sur la figure. Dans le cas représenté, ces moyens consistent en un trou taraudé 7, dont l'axe est perpendiculaire à celui du canal 5 et qui croise celui-ci au centre géométrique de la cavité hémisphérique 4, bien que cela ne soit pas indispensable. La référence 8 désigne une gorge qui entoure l'extrémité qui présente le trou 7, et est associée à un capuchon 9, destiné à protéger contre la corrosion le contact entre le ressort à gaz 6 et la cage à rotule, ainsi que le fond du ressort à gaz lui-même.

La cage à rotule est en matière plastique moulée, ou, dans le cas de fortes contraintes, en métal.

La bague élastique 10, en forme de C, entoure partiellement la cage 3 à rotule au voisinage du logement 4. Elle sera décrite avec plus de précision dans la suite.

Comme le montre la figure 2, le corps de la cage à rotule présente, à sa surface extérieure, dans la région du logement 4, une rainure 11. Cette rainure s'étend sur un peu plus de 180° de la périphérie de la cage, partant du débouché d'une fente 13, passant au-dessus du fond du logement 4, et revenant, de l'autre côté de la cage, s'arrêter au débouché de l'autre fente 13. Dans la partie sommitale, c'est-à-dire la partie opposée à l'ouverture du canal 5, le fond de la rainure est sensiblement plan, c'est-à-dire perpendiculaire à l'axe du canal 5, avec toutefois deux bossages 12, visibles aux figures 2 à 11, qui font saillie sur le fond de la rainure. A chacune de ses extrémités, la rainure 11 communique avec une fente 13, à section constante sur toute sa longueur, qui traverse la paroi de la cage à rotule, pour déboucher dans le canal 5, au-dessous de la jonction de celui-ci avec le logement 4, à proximité d'une partie évasée 14, par laquelle le canal 5 débouche vers l'extérieur. La direction générale de la fente 13 fait un angle d'environ 60° avec l'axe du logement 4, les deux fentes convergeant vers l'axe du canal 5, en direction de l'extérieur de la cage, c'est-à-dire à l'opposé du logement 4. La face interne 15 de la fente 13, c'est-à-dire celle qui est la plus près du logement 4, est sensiblement plane, et se prolonge jusqu'à la surface extérieure de la cage à rotule, en constituant la fin de la rainure 11.

La bague élastique 10 est représentée au repos à la figure 2. On constate qu'elle a une forme générale en C, symétrique, avec une zone médiane 20 à peu près plate, mais pourvu à sa partie centrale d'une saillie 21, à forte convexité vers l'extérieur du C.

La zone médiane 20 est prolongée par deux ailes en arc de cercle 22, qui font un angle d'environ 45° avec le corps 20, et s'étendent sur environ 90°. Ces ailes 22 se prolongent par des sections terminales 23, qui sont sensiblement rectilignes, et convergent l'une vers l'autre.

En l'absence de rotule, la bague exerce sur le corps de la cage des forces de pression à peu près parallèles à l'axe du canal sur les bossages 12, qui sont écartés de l'axe, ces forces étant compensées par des forces de pression exercées par les sections terminales 23 sur les faces internes 15 des fentes 13. Cette particularité, qu'on trouve déjà dans EP-A-0 287 411, n'est pas indispensable pour la présente invention, mais elle garantit qu'avant l'introduction de la rotule, les deux sections terminales 23 sont bien équidistantes de l'axe du canal, ce qui facilite cette introduction.

Les sections terminales 23 sont pliées à près de 180°, vers l'extérieur, c'est-à-dire vers le bas sur les figures 2 à 6. Elles comportent donc une pliure 24, et une partie repliée 25, de faible longueur, environ 1/4 de la section terminale, dirigée en sens inverse de la section terminale proprement dite.

La pliure 24 présente une surface externe curviligne qui pourra être désignée dans la suite par "l'arrondi" de la pliure.

Comme le montrent les figures, la rotule 1 n'est en contact avec la bague que par la pliure 24, qui est dépourvue d'aspérités ou angles vifs.

Conformément à la figure 2, au début de son introduction, la rotule est en contact avec l'arrondi de la surface externe de chaque pliure 24, dans sa partie la plus écartée de la cavité.

La figure 3, qui montre le maximum d'écartement des sections terminales 23 montre que la partie repliée 25 a pénétré dans la fente 13. Du fait du mouvement de la rotule vers la cavité 4, les sections terminales 23 sont encore en contact avec la face interne 15 de la fente, et par conséquent le bord d'extrémité 17 de la partie repliée 25 ne frotte pas contre la face externe 26 de la fente 13, ou frotte sur elle avec une force faible.

Dans la disposition de la figure 4, la rotule est au fond de la cavité, et est en contact avec l'arrondi de la surface externe de chaque pliure 24 dans sa partie la plus proche de la cavité, à faible distance du tourillon 2, mais sans contact avec lui tant qu'il est aligné avec l'axe du canal 5. L'élasticité de la bague maintient l'ensemble en place sans jeu.

La figure 5 montre la situation dans le cas d'une force d'extraction dirigée selon l'axe du canal. L'effet de cette force est de pousser les sections terminales 23 contre la face externe 26 des fentes 13. Le bord d'extrémité 17 de la partie repliée 25 vient en appui contre la face interne du canal 5, juste au-dessous, sur la figure, du débouché de la fente 13 dans ce canal. Cela assure un blocage efficace de la bague, empêchant les sections terminales 23 de se déplacer vers l'extérieur à travers la fente 13. On conçoit que cette situation se produit même si la force d'extraction, sans être parallèle à l'axe du canal, fait avec lui un angle assez faible.

La figure 6 montre la situation dans le cas d'une force d'extraction fortement oblique par rapport à l'axe du canal. Du côté opposé à la direction de cette force, c'est-à-dire à droite sur la figure, la section terminale 23A reste en appui contre la face externe 26A de la fente correspondante 13A, ce qui assure un blocage efficace. Du côté de la force d'extraction, c'est-à-dire à gauche sur la figure, la partie repliée 25B a pénétré dans la fente, mais son bord d'extrémité 17 à angle vif est poussé contre la face externe 26B de la fente correspondante 13B, ce qui assure un freinage, ou un ancrage efficace. Ainsi, l'extraction non désirée est rendue très difficile, car elle exige une force suffisante pour une déformation très importante de la cage à rotule elle-même.

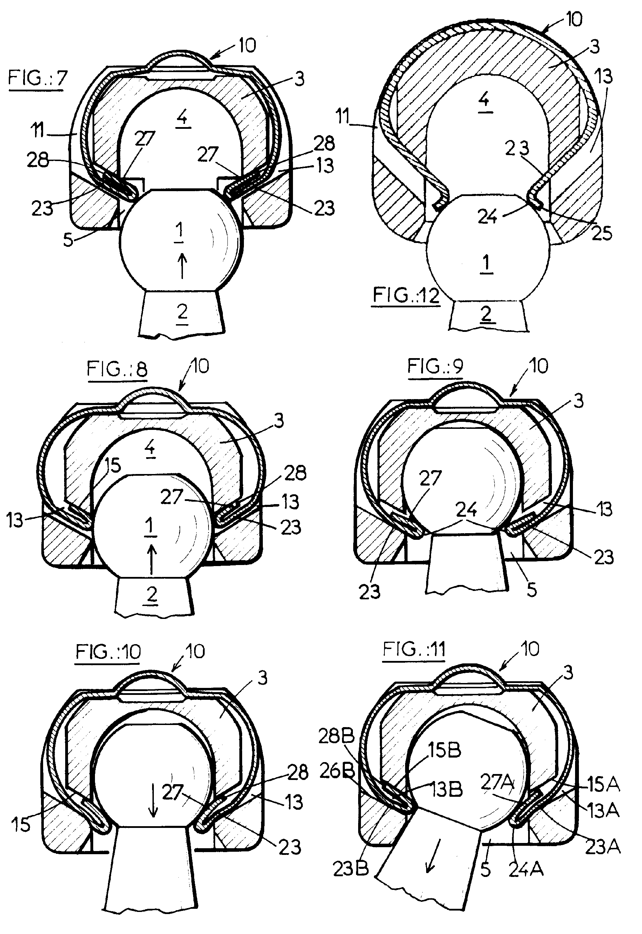

Les figures 7 à 11 montrent des situations analogues mais où la section terminale 23 porte une partie repliée 27 tournée vers l'intérieur, et de longueur nettement supérieure à celle des parties repliées 25 de l'exemple précédent, environ 3/4 de la section terminale. Au repos, voir figure 7, le bord d'extrémité 28 des parties repliées est engagé dans la fente 13.

La figure 9 montre qu'au repos, la situation est analogue à celle de la figure 4, avec suppression des jeux.

La figure 10, qui correspond à la figure 5, montre que, dans le cas d'une force d'extraction dirigée axialement, la flexion des sections 23 introduit un coincement efficace, qui s'oppose au déplacement de ces sections vers l'extérieur. En outre, cette flexion tend maintenant à écarter le bord d'extrémité 28 de la section terminale 23, et à l'ancrer dans la face interne 15 de la fente, ce qui contribue encore à empêcher la sortie des sections terminales.

La figure 11 est relative à une force d'extraction fortement oblique. Du côté opposé à cette force, l'action de celle-ci, conjuguée à la souplesse de la partie terminale 23A, tend à tirer celle-ci vers l'intérieur du canal 5, et donc à augmenter l'effet de blocage. Le fait que la partie repliée 27A porte sur la face interne 15A de la fente 13A maintient un bon contact de la pliure 24A avec la rotule. De l'autre côté, le bord d'extrémité 28B de la partie pliée est près de sortir de la fente 13B, mais c'est seulement après avoir frotté de façon intense contre la face interne 15B sur la longueur de celle-ci, et il continue de maintenir la partie terminale 23B en appui contre la face externe 26B de la fente. Une résistance efficace à l'expulsion est donc encore assurée.

La figure 12 montre une autre réalisation de la bague, analogue à celle des figures 2 à 6, c'est-à-dire avec les sections terminales 23 repliées vers l'extérieur, mais seulement de 90° environ, qui est bien suffisant pour que le contact entre la rotule et la bague se fasse exclusivement à l'endroit de la pliure 24. La partie repliée 25 est suffisamment courte pour pouvoir passer à travers la fente 13 lors de la mise en place ou de l'enlèvement de la bague. On notera que, dans cette réalisation, les bossages 12 n'existent pas, si bien que la bague prend appui sur le sommet de la cage. Les différentes formes de la cage et de la bague peuvent être combinées entre elles à volonté.

Suivant une variante de réalisation non représentée, chaque section terminale 23 peut comporter, par exemple, deux pliures à 90° reliées par une surface plane ou légèrement curviligne. Lors de son introduction dans la cavité 4, la rotule 1 prend d'abord appui contre la surface externe de la pliure la plus éloignée de la cavité, puis contre la surface de liaison entre les deux pliures. Une fois en place dans la cavité 4, la rotule 1 est en appui contre la surface externe de la pliure la plus proche de la cavité 4.

## Revendications

1. Cage à rotule, formée d'un corps présentant une cavité (4) reliée à l'extérieur par un canal (5) et adaptée à recevoir une rotule (1), solidaire d'un tourillon (2) et introduite dans ladite cavité (4) par ledit canal (5) pour constituer une articulation démontable, ladite cage (3) étant pourvue de moyens (7) de fixation a un support, et d'une bague élastique (10), dans son ensemble en forme de C, dont le corps entoure ladite cage (3), et dont les extrémités pénètrent dans deux fentes (13) de la cage (3), ces fentes (13) étant disposées de part et d'autre dudit canal (5) et débouchant dans celui-ci pour permettre aux extrémités de la bague (10) de faire saillie à l'intérieur du canal (5) et de retenir la rotule (1) dans la cavité (4), et étant obliques par rapport à l'axe du canal (5) et s'écartant du centre de la (10) cavité (4) en se rapprochant dudit axe, la forme de la bague étant calculée de telle façon que lorsque la rotule (1) est dans la cavité (4), les extrémités de la bague (10) sont en contact constant avec ladite rotule (1), caractérisée en ce que :
- les deux zones d'extrémité de la bague (10) comportent une partie (25) repliée vers l'extérieur par rapport au centre de la cavité (4), selon une pliure curviligne (24) calculée pour que le contact entre la bague (10) et la rotule (1) se fasse sur l'extérieur de la pliure curviligne (24) lors de l'introduction de la rotule (1) et sur l'intérieur de ladite pliure curviligne (24) lorsque la rotule (1) est dans ladite cavité (4), à l'exclusion de tout contact avec le bord d'extrémité (17) de la partie repliée (25);
- et en ce que les parties repliées (25) peuvent pénétrer chacune dans la fente (13) correspondante, et leur longueur est calculée pour que le bord d'extrémité (17) de la partie repliée (25) vienne en appui contre la paroi interne du canal (5) ou contre la paroi externe (26) de la fente (13) lorsque la rotule est soumise à un effort d'extraction.

2. Cage à rotule, formée d'un corps présentant une cavité (4) reliée à l'extérieur par un canal (5) et adaptée à recevoir une rotule (1), solidaire d'un tourillon (2) et introduite dans ladite cavité (4) par ledit canal (5) pour constituer une articulation démontable, ladite cage (3) étant pourvue de moyens (7) de fixation a un support, et d'une bague élastique (10), dans son ensemble en forme de C, dont le corps entoure ladite cage (3), et dont les extrémités pénètrent dans deux fentes (13) de la cage (3), ces fentes (13) étant disposées de part et d'autre dudit canal (5) et débouchant dans celui-ci pour permettre aux extrémités de la bague de faire saillie à l'intérieur du canal (5) et de retenir la rotule (1) dans la cavité (4), et étant obliques par rapport à l'axe du canal (5) et s'écartant du centre de la cavité (4) en se rapprochant dudit axe, la forme de la bague (10) étant calculée de telle façon que lorsque la rotule (1) est dans la cavité (4), les extrémités de la bague (10) sont en contact constant avec ladite rotule (1), caractérisée en ce que :
- les deux zones d'extrémité de la bague (10) comportent une partie (27) repliée vers l'intérieur par rapport au centre de la cavité (4), selon une pliure curviligne (24A) calculée pour que le contact entre la bague (10) et la rotule (1) se fasse sur l'extérieur de la pliure curviligne (24A) lors de l'introduction de la rotule (1) et sur l'intérieur de ladite pliure curviligne (24A) lorsque la rotule (1) est dans ladite cavité (4), à l'exclusion de tout contact avec le bord d'extrémité (28) de la partie repliée (27);
et leur longueur est calculée pour que, lorsque la rotule (1) est dans la cage (3), le bord d'extrémité (28) de la partie repliée (27) soit à l'intérieur de la fente (13), et lorsque la rotule (1) est soumise à un effort d'extraction, le bord d'extrémité (28) de la partie repliée (27) s'écarte du reste de la bague (10) pour venir en contact avec la paroi interne (15) de la fente (13).

3. Cage à rotule selon l'une des revendications 1 ou 2, caractérisée en ce que le bord d'extrémité (17; 28) de chaque partie repliée (25; 27) est à angles vifs pour un frottement important contre une paroi intérieure du canal (5) ou de la fente (13).

## Patentansprüche

1. Kugelgehäuse, gebildet aus einem Körper, der einen Hohlraum (4) aufweist, der mit der Außenwelt durch einen Kanal (5) verbunden und zur Aufnahme einer Kugel (1) geeignet ist, die einstückig mit einem Zapfen (2) verbunden und in den Hohlraum durch den Kanal (5) eingeführt ist, um ein demontierbares Gelenk zu bilden, wobei das Gehäuse (3) mit Mitteln (7) zur Befestigung an einem Träger versehen ist, und mit einem elastischen Ring (10), der im ganzen C-förmig ist, dessen Körper das Gehäuse (3) umgibt, und dessen Enden in zwei Schlitze (13) des Gehäuses (3) eindringen, wobei die Schlitze (13) auf beiden Seiten des Kanals (5) angeordnet sind und in diesen munden, um den Enden des Ringes (10) zu ermöglichen, ins Innere des Kanals (5) zu springen und die Kugel (1) in dem Hohlraum (4) zurückzuhalten, und die bezüglich der Achse des Kanals (5) geneigt sind und sich vom Zentrum des Hohlraumes (4) entfernen, wobei sie sich der Achse nähern, wobei die Form des Ringes so bemessen ist, daß, während die Kugel (1) in dem Hohlraum (4) ist, die Enden des Ringes (10) in standigem Kontakt mit der Kugel (1) sind, dadurch gekennzeichnet, daß die beiden Endbereiche des Ringes (10) einen Teil (25) aufweisen, der bezüglich des Zentrums des Hohlraumes (4) nach außen zuruckgefaltet ist, entlang einer krummlinigen Faltung (24), die so berechnet ist, daß der Kontakt zwischen dem Ring (10) und der Kugel (1) während des Einführens der Kugel auf der Außenseite der krummlinigen Faltung (24) stattfindet und auf der Innenseite der krummlinigen Faltung (24), wenn die Kugel in dem Hohlraum (1) angeordnet ist, unter Ausschluß von jedem Kontakt mit dem Außenrand (17) des zurückgefalteten Teils (25), und daß die zurückgefalteten Teile (25) jeweils in den entsprechenden Schlitz (13) eindringen können und ihre Länge so berechnet ist, daß der Außenrand (17) des zurückgefalteten Teils (25) in Anlage gegen die Innenwand des Kanals (5) gelangt oder gegen die Außenwand (26) des Schlitzes (13), wenn die Kugel einer Ausziehkraft unterworfen ist.

2. Kugelgehäuse, gebildet aus einem Körper, der einen Hohlraum (4) aufweist, der mit der Außenwelt durch einen Kanal (5) verbunden und zur Aufnahme einer Kugel (1) geeignet ist, die einstückig mit einem Zapfen (2) verbunden und in den Hohlraum durch den Kanal (5) eingeführt ist, um ein demontierbares Gelenk zu bilden, wobei das Gehäuse (3) mit Mitteln (7) zur Befestigung an einem Träger versehen ist, und mit einem elastischen Ring (10), der im ganzen C-förmig ist, dessen Körper das Gehäuse (3) umgibt, und dessen Enden in zwei Schlitze (13) des Gehäuses (3) eindringen, wobei die Schlitze (13) auf beiden Seiten des Kanals (5) angeordnet sind und in diesen münden, um den Enden des Ringes (10) zu ermöglichen, ins Innere des Kanals (5) zu springen und die Kugel (1) in dem Hohlraum (4) zurückzuhalten, und die bezüglich der Achse des Kanals (5) geneigt sind und sich vom Zentrum des Hohlraumes (4) entfernen, wobei sie sich der Achse nähern, wobei die Form des Ringes so berechnet ist, daß, während die Kugel (1) in dem Hohlraum (4) ist, die Enden des Ringes (10) in ständigem Kontakt mit der Kugel (1) sind, dadurch gekennzeichnet, daß die beiden Endbereiche des Ringes (10) einen Teil (27) aufweisen, der bezüglich des Zentrums des Hohlraumes (4) nach innen zurückgefaltet ist, entlang einer krummlinigen Faltung (24a), die so berechnet ist, daß der Kontakt zwischen dem Ring (10) und der Kugel (1) während des Einführens der Kugel (1) auf der Außenseite der krummlinigen Faltung (24a) stattfindet und auf der Innenseite der krummlinigen Faltung (24a), wenn die Kugel (1) in dem Hohlraum (4) angeordnet ist, unter Ausschluß von jedem Kontakt mit dem Außenrand (28) des zurückgefalteten Teils (27), und daß ihre Länge so berechnet ist, daß der Außenrand (28) des zurückgefalteten Teils (27) im Inneren des Schlitzes (13) ist, wenn die Kugel (1) im Gehäuse (3) angeordnet ist, und der Außenrand (28) des zurückgefalteten Teils (27) sich vom Rest des Ringes (10) wegspreizt, um in Kontakt mit der Innenwand (15) des Schlitzes (13) zu kommen, wenn die Kugel (1) einer Auszugskraft unterworfen ist.

3. Kugelgehäuse gemäß einem der Ansprüche 1 oder 2, dadurch gekennzeichnet, daß der Außenrand (17; 28) jedes zurückgefalteten Teils (25; 27) scharfe Winkel aufweist, für eine bedeutsame Reibung gegen eine Innenwand des Kanals (5) oder des Schlitzes (13).

## Claims

1. Ball cage formed of a body having a cavity (4) connected to the outside by a passageway (5) and suitable for receiving a ball (1), integral with a journal (2) and inserted into the said cavity (4) via the said passageway (5) so as to constitute a dismantlable joint, the said cage (3) being provided with means (7) for fixing to a support and with an elastic ring (10) which is C-shaped overall, whose body surrounds the said cage (3) and whose ends penetrate into two slits (13) of the cage (3), these slits (13) being arranged on either side of the said passageway (5) and opening out into the latter so as to allow the ends of the ring (10) to project inside the passageway (5) and to retain the ball (1) in the cavity (4), and being oblique with respect to the axis of the passageway (5) and moving away from the centre of the cavity (4) by moving closer to the said axis, the shape of the ring (10) being designed so that when the ball (1) is in the cavity (4), the ends of the ring (10) are in constant contact with the said ball (1), characterized in that:
- the two end zones of the ring (10) include a part (25) which is folded over outwards with respect to the centre of the cavity (4) along a curved fold (24) which is designed so that the contact between the ring (10) and the ball (1) takes place on the outside of the curved fold (24) when the ball (1) is inserted, and on the inside of the said curved fold (24) when the ball (1) is in the said cavity (4), to the exclusion of any contact with the end edge (17) of the folded-over part (25);
- and in that the folded-over parts (25) may each penetrate into the corresponding slit (13), and their length is designed so that the end edge (17) of the folded-over part (25) comes to bear against the internal wall of the passageway (5) or against the external wall (26) of the slit (13) when the ball is subjected to an extraction force.

2. Ball cage formed of a body having a cavity (4) connected to the outside by a passageway (5) and suitable for receiving a ball (1), integral with a journal (2) and inserted into the said cavity (4) via the said passageway (5) so as to constitute a dismantlable joint, the said cage (3) being provided with means (7) for fixing to a support and with an elastic ring (10) which is C-shaped overall, whose body surrounds the said cage (3) and whose ends penetrate into two slits (13) of the cage (3), these slits (13) being arranged on either side of the said passageway (5) and opening out into the latter so as to allow the ends of the ring to project inside the passageway (5) and to retain the ball (1) in the cavity (4), and being oblique with respect to the axis of the passageway (5) and moving away from the centre of the cavity (4) by moving closer to the said axis, the shape of the ring (10) being designed so that when the ball (1) is in the cavity (4), the ends of the ring (10) are in constant contact with the said ball (1), characterized in that:
- the two end zones of the ring (10) include a part (27) which is folded over inwards with respect to the centre of the cavity (4) along a curved fold (24A) which is designed so that the contact between the ring (10) and the ball (1) takes place on the outside of the curved fold (24A) when the ball (1) is inserted, and on the inside of the said curved fold (24A) when the ball (1) is in the said cavity (4), to the exclusion of any contact with the end edge (28) of the folded-over part (27);
- and their length is designed so that, when the ball (1) is in the cage (3), the end edge (28) of the folded-over part (27) is inside the slit (13), and when the ball (1) is subjected to an extraction force, the end edge (28) of the folded-over part (27) moves away from the rest of the ring (10) to come into contact with the internal wall (15) of the slit (13).

3. Ball cage according to one of Claims 1 or 2, characterized in that the end edge (17; 28) of each folded-over part (25; 27) has sharp corners for significant friction against an internal wall of the passageway (5) or of the slit (13).
